# FASCICULE DE BREVET EUROPEEN

(11) **EP 1 802 886 B1**
(45) Date de publication et mention de la délivrance du brevet: **11.06.2014**
(21) Numéro de dépôt: 05815870.0
(22) Date de dépôt: 18.10.2005
(51) Int. Cl.: F16D 65/092

(54) **GARNITURE DE FRICTION A SEC POUR UN DISPOSITIF DE FRICTION D'UN EMBRAYAGE A SEC DE VEHICULE AUTOMOBILE, DISPOSITIF DE FRICTION A SEC , EMBRAYAGE A SEC ET MOULE POUR LE MOULAGE DE LA GARNITURE DE FRICTION**
TROCKENREIBUNGSVERKLEIDUNG FÜR DIE REIBUNGSVORRICHTUNG EINER TROCKENKUPPLUNG FÜR EIN MOTORFAHRZEUG, TROCKENREIBUNGSVORRICHTUNG, TROCKENREIBUNGSKUPPLUNG UND FORM ZUR FORMUNG EINER REIBUNGSVERKLEIDUNG
DRY FRICTION LINING FOR THE FRICTION DEVICE OF A DRY CLUTCH FOR A MOTOR VEHICLE, A DRY FRICTION DEVICE, A DRY FRICTION CLUTCH AND A MOULD FOR MOULDING A FRICTION LINING

(30) Priorité: 18.10.2004 FR 0452354
(43) Date de publication de la demande: 04.07.2007
(73) Titulaire: Valeo Matériaux de Friction, 87020 Limoges (FR)
(72) Inventeur: MARCHISSEAU, Michel, F-87100 LIMOGES (FR); ADAMCZAK, Loïc, F-87140 ROUSSAC (FR)
(74) Mandataire: Jeuland, Mickaël
(86) Numéro de dépôt international: PCT/FR2005/050866
(87) Numéro de publication internationale: WO 2006/043002

(56) Documents cités:
- WO-A-97/38236
- WO-A-02/073059
- FR-A- 1 241 177
- FR-A- 2 733 290
- GB-A- 488 382
- US-A- 3 841 949
- US-A1- 2003 234 149

## Description

La présente invention concerne une garniture de friction à sec pour un dispositif de friction d'un embrayage à sec de véhicule automobile, un dispositif de friction à sec comportant une telle garniture de friction, un embrayage à sec comportant un tel dispositif de friction, ainsi qu'un moule pour le moulage de la garniture de friction et une méthode de rodage d'une telle garniture de friction.

Un embrayage de véhicule automobile est destiné à transmettre un couple entre un volant moteur du véhicule automobile et un arbre d'entrée d'une boîte de vitesses. A cet effet, l'embrayage comporte un mécanisme, solidaire en rotation du volant moteur, et un dispositif de friction, solidaire en rotation de l'arbre de boîte de vitesses.

On différentie usuellement les garnitures de friction à sec destinées à équiper un embrayage à sec (« dry clutch » en anglais) des garnitures de friction humides destinées à équiper un embrayage humide (« wet clutch » en anglais).

Les garnitures à sec fonctionnent dans un environnement d'air à la différence des garnitures humides qui fonctionnent dans un environnement humide, notamment d'huile. Si les deux types de garnitures et de dispositifs associés permettent de transmettre un couple, il n'en existe pas moins de significatives différences dans le choix du type de garnitures, notamment le choix des matériaux et de leur mise en forme en fonction du milieu dans lequel ils sont appelés à travailler.

Le mécanisme d'un embrayage à sec comporte un plateau de pression et un plateau de réaction destinés à coopérer chacun avec une garniture de friction respective du dispositif de friction. Chaque garniture de friction est portée par au moins un support, habituellement de forme générale de révolution, appelé généralement disque de friction.

On connaît déjà, dans l'état de la technique, une garniture de friction pour un dispositif de friction d'un embrayage de véhicule automobile, du type comportant une surface de friction destinée à coopérer avec un plateau de pression ou de réaction de l'embrayage.

Le fonctionnement optimal d'un dispositif de friction d'embrayage n'est généralement obtenu qu'après une période de rodage de cet embrayage. En effet, avant rodage, d'éventuels défauts de surface ou de parallélisme de la garniture de friction et du plateau avec lequel la garniture coopère limitent l'aire de contact des surfaces complémentaires de friction et donc l'efficacité de fonctionnement de l'embrayage. Toutefois, au cours du rodage, ces défauts sont atténués jusqu'à disparition éventuelle du fait essentiellement de l'usure de la garniture.

Des défauts de confort, connus sous le nom de « broutement » peuvent apparaître au cours de la période de rodage.

La période de rodage peut être relativement longue. Il faut parfois prévoir environ 8000 cycles de débrayage/embrayage avant que le fonctionnement du dispositif de friction soit optimal. GB 488382 A révèle une garniture de friction à sec selon le préambule de la revendication 1.

L'invention a notamment pour but de réduire le temps de rodage de la garniture.

A cet effet, l'invention a pour objet une garniture de friction à sec du type précité, où la surface de friction comprend des saillies de hauteurs sensiblement identiques, ces saillies s'étendant en hauteur entre des plans inférieur et supérieur sensiblement parallèles, l'aire de l'ensemble des parties du plan supérieur intersectant les saillies étant inférieure ou égale à 60% de l'aire de la partie du plan inférieur intersectant la garniture.

Les saillies étant agencées de manière que l'aire de l'ensemble des parties du plan supérieur intersectant ces saillies est inférieure ou égale à 60% de l'aire de la partie du plan inférieur intersectant la garniture, la garniture de friction selon l'invention s'use relativement rapidement en début de vie, généralement jusqu'à disparition des saillies.

Les éventuels défauts de surface et de parallélisme des surfaces complémentaires de friction de la garniture et du plateau correspondant s'atténuent relativement rapidement, si bien que la période de rodage nécessaire pour l'optimisation du fonctionnement du dispositif de friction est plus courte que pour un dispositif de friction classique.

On note que l'on connaît de l'état de la technique des garnitures destinées à travailler dans l'huile (pour embrayage humide) dont la surface de friction présente des saillies.

Il convient de noter que le fonctionnement de telles garnitures diffère de celui des garnitures selon l'invention, notamment car les saillies des surfaces de garnitures humides ont pour fonction d'améliorer le refroidissement de la garniture par une circulation d'huile optimisée et que ces saillies sont conservées pendant toute la vie de la garniture.

Une garniture de friction à sec selon l'invention peut en outre comporter l'une ou plusieurs des caractéristiques suivantes :
- au moins une saillie a une forme générale cylindrique d'axe sensiblement perpendiculaire au plan inférieur ;
- au moins une saillie a une forme générale conique ou tronconique convergeant vers le plan supérieur ;
- la garniture de friction comporte au moins deux saillies munies de bases jointives ;
- le rapport de la hauteur des saillies sur une hauteur de la garniture de friction excluant les saillies est compris entre 2 à 10% ;
- la hauteur des saillies est comprise entre 0,1 et 0,3 mm ;
- la garniture de friction a une hauteur, en excluant les saillies, comprise entre 2,5 et 4 mm.

L'invention a également pour objet un dispositif de friction à sec pour embrayage à sec de véhicule automobile, qui comporte une garniture de friction à sec telle que définie précédemment, ainsi que l'utilisation d'une telle garniture pour un dispositif de friction à sec.

De manière optionnelle, le dispositif de friction à sec selon l'invention comporte deux supports mobiles liés entre eux par des moyens d'amortissement axial, chaque support portant une garniture de friction telle que définie précédemment.

L'invention concerne également un embrayage à sec de véhicule automobile, qui comporte un dispositif de friction à sec tel que défini précédemment, ainsi que l'utilisation des garnitures précitées pour équiper un embrayage à sec.

L'invention a également pour objet un moule pour le moulage d'une garniture de friction, qui est muni d'une surface de moulage de forme complémentaire de la surface de friction d'une garniture de friction telle que définie précédemment.

L'invention a enfin pour objet une méthode de rodage d'une garniture de friction où l'on choisit une garniture selon l'invention et où le rodage s'effectue par abrasion d'une partie au moins, voire de la totalité, des saillies de ladite garniture.

L'invention sera mieux comprise à la lecture de la description qui va suivre, donnée uniquement à titre d'exemple et faite en se référant aux dessins annexés dans lesquels :
- la figure 1 est une vue schématique en coupe d'une garniture de friction à sec neuve selon un premier mode de réalisation de l'invention ;
- la figure 2 est une vue similaire à la figure 1 de la garniture de friction en cours de rodage ;
- la figure 3 est une vue similaire à la figure 1 de la garniture de friction après rodage ;
- la figure 4 est un graphique représentant l'évolution d'une aire de contact de surfaces de friction complémentaires de la garniture de friction de la figure 1 et d'un plateau de pression ou de réaction correspondant, en fonction de l'usure de la garniture de friction ;
- la figure 5 est une vue similaire à la figure 1 d'une garniture de friction selon un deuxième mode de réalisation de l'invention ;
- la figure 6 est un graphique similaire à celui de la figure 4, représentant l'évolution d'une aire de contact de surfaces de friction complémentaires de la garniture de friction de la figure 5 et d'un plateau de pression ou de réaction correspondant, en fonction de l'usure de la garniture de friction ;
- la figure 7 est une vue similaire à la figure 1 d'une garniture de friction selon un troisième mode de réalisation de l'invention ;
- la figure 8 est un graphique similaire à celui de la figure 4, représentant l'évolution d'une aire de contact de surfaces de friction complémentaires de la garniture de friction de la figure 7 et d'un plateau de pression ou de réaction correspondant, en fonction de l'usure de la garniture de friction.

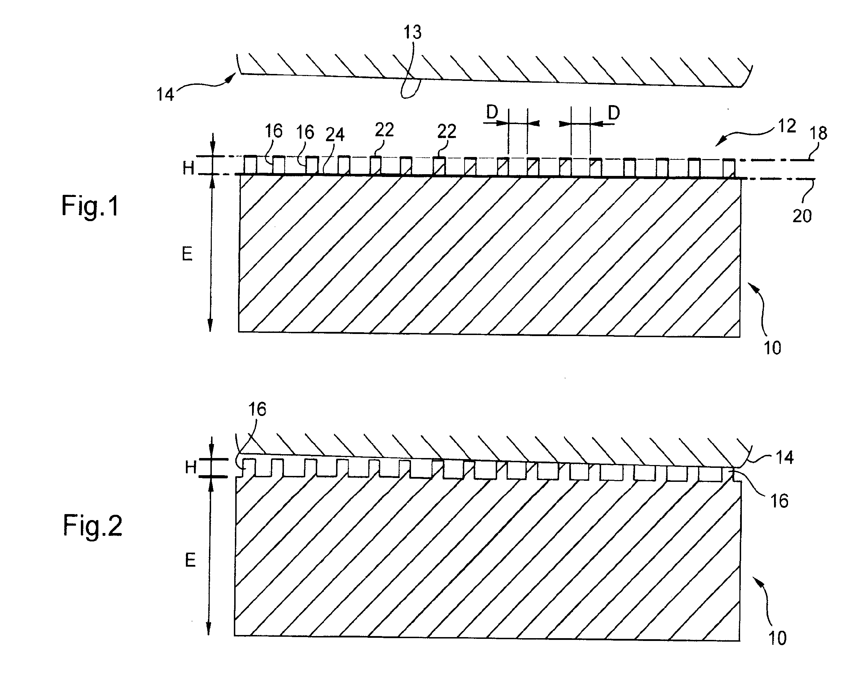

On a représenté sur la figure 1 une garniture de friction à sec selon un premier mode de réalisation de l'invention. Cette garniture, désignée par la référence générale 10, est destinée à équiper un dispositif de friction d'un embrayage de véhicule automobile.

La garniture de friction 10 est munie d'une surface de friction 12, destinée à coopérer avec une surface de friction complémentaire 13 d'un plateau de pression ou de réaction 14 de l'embrayage, afin de lier en rotation le dispositif de friction et un mécanisme de l'embrayage comportant le plateau 14.

De préférence, le dispositif de friction à sec comporte deux supports mobiles, liés entre eux par des moyens d'amortissement axial, chaque support portant une garniture de friction 10 coopérant respectivement avec le plateau de pression et le plateau de réaction.

On a représenté sur la figure 1 un léger défaut de parallélisme entre la garniture de friction 10 et le plateau 14, comme il en existe dans certains cas.

Afin de réduire le temps de rodage de la garniture 10, la surface de friction 12 est munie de saillies 16. Dans le premier mode de réalisation de l'invention, les saillies 16 ont des formes générales cylindriques, d'axes perpendiculaires à la surface de friction 12, et des hauteurs H sensiblement identiques. En général, la distance minimale D entre deux saillies 16 est de 0,3 mm.

De préférence, le rapport de la hauteur H des saillies 16 sur une hauteur E de la garniture de friction 10 excluant les saillies est compris entre 2 et 10%, de manière préférée entre 4 et 7%. Par exemple, la hauteur H des saillies 16 est de 0,2 mm, et la hauteur E de la garniture de friction 10 (mesurée en excluant les saillies) est de 3,5 mm.

Les saillies 16 s'étendent en hauteur entre des plans géométriques supérieur 18 et inférieur 20 sensiblement parallèles. Lorsque la garniture 10 est neuve, des parties 22 du plan supérieur 18 intersectant les saillies 16 sont destinées à coopérer avec le plateau 14.

Afin de réduire efficacement le temps de rodage, l'aire de l'ensemble des parties 22 du plan supérieur 18 intersectant les saillies 16 est inférieur ou égal à 60% de l'aire d'une partie 24 du plan inférieur 20 intersectant la garniture de friction 10.

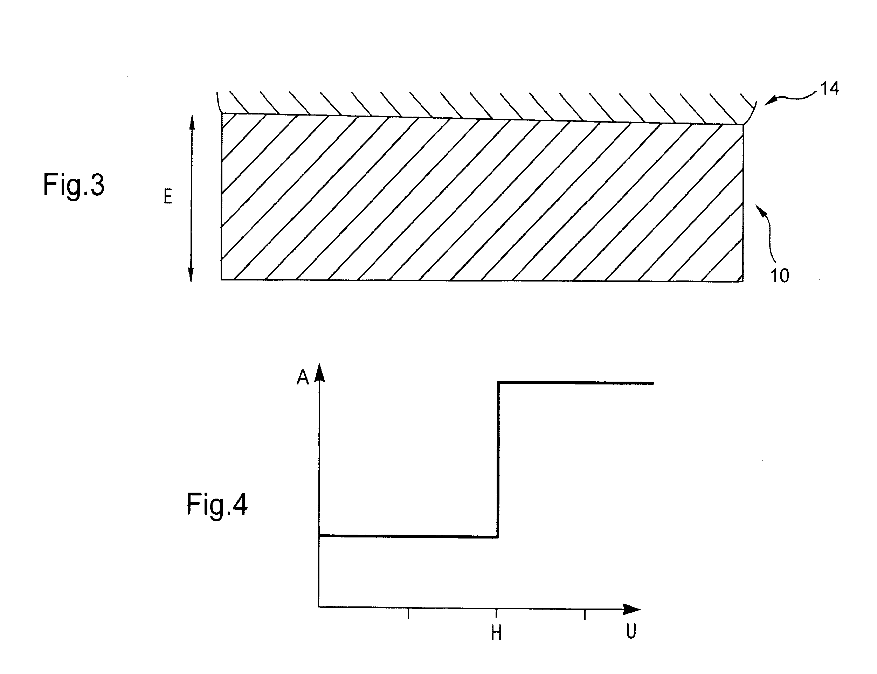

Les figures 2 et 3 représentent la garniture de friction 10 de la figure 1, respectivement pendant et après le rodage.

Sur la figure 2, on voit que les saillies 16 coopérant avec le plateau 14 s'usent progressivement au cours du rodage.

On notera que la surface de contact ajourée formée par les saillies 16 est plus facile à user qu'une surface de contact pleine. Ainsi, on obtient plus rapidement, lors du rodage, une aire de contact optimale entre le plateau 14 et la garniture de friction 10.

La figure 3 représente la garniture de friction 10 coopérant avec le plateau 14 après rodage, toutes les saillies 16 ayant été usées.

La figure 4 est un graphique représentant l'évolution de l'aire de contact des surfaces de friction complémentaires 12, 13 de la garniture de friction 10 et du plateau 14 (notée A sur le graphique) en fonction de l'usure de la garniture de friction 10 (notée U sur le graphique).

Sur ce graphique, on voit que, pendant la période de rodage, l'aire de contact, égale à l'aire de l'ensemble des parties 22, reste sensiblement constante, jusqu'à ce que l'usure soit de même amplitude que la hauteur H des saillies. L'aire de contact A est alors maximale.

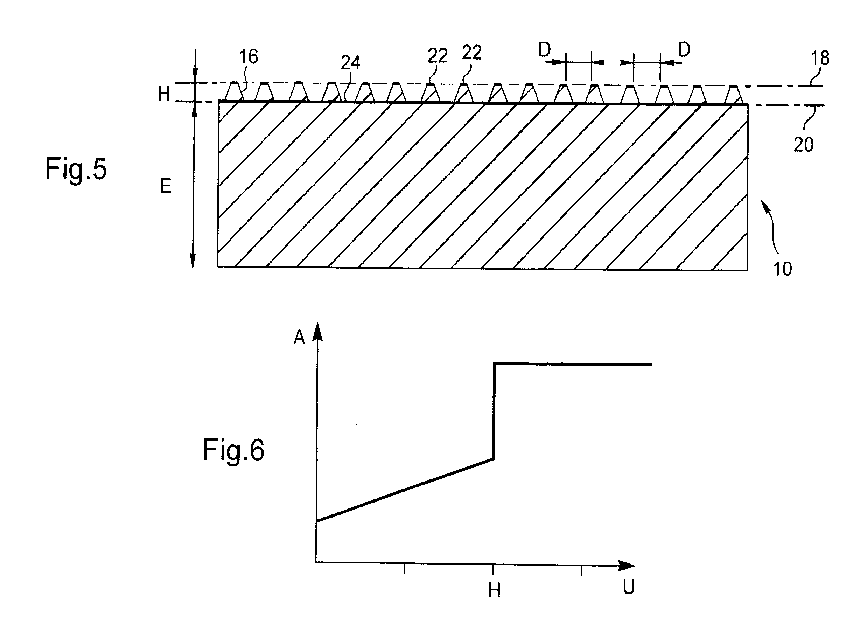

Sur les figures 5 à 8, les éléments similaires à ceux des figures précédentes sont désignés par des références identiques.

Dans le deuxième mode de réalisation de l'invention représenté sur la figure 5, les saillies 16 ont une forme générale tronconique convergeant vers le plan supérieur 18.

Dans ce cas, comme représenté sur le graphique de la figure 6, l'aire de contact A des surfaces de friction complémentaires 12, 13 augmente progressivement jusqu'à ce que l'usure U soit de même amplitude que la hauteur H des saillies 16.

Lorsque l'usure U est de même amplitude que la hauteur H des saillies 16, la valeur de l'aire de contact A atteint sa valeur maximale, du fait que l'aire de contact n'est plus uniquement répartie sur les saillies 16, mais sur toute la partie 24.

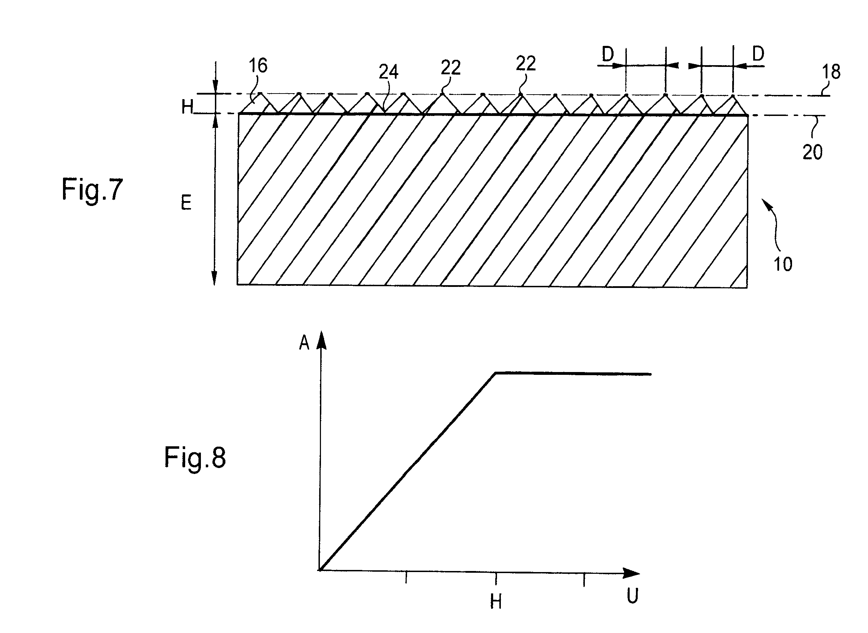

Dans le troisième mode de réalisation de l'invention représenté sur la figure 7, les saillies 16 ont une forme générale conique convergeant vers le plan supérieur 18, et sont munies de bases jointives.

Dans ce cas, comme représenté sur le graphique de la figure 8, l'aire de contact A des surfaces de friction complémentaires 12, 13 augmente progressivement jusqu'à atteindre sa valeur maximale lorsque l'usure U a la même amplitude que la hauteur H des saillies 16.

De préférence, la garniture 10 selon l'invention est obtenue par moulage au moyen d'un moule muni d'une surface de moulage de forme complémentaire de la surface de friction 12.

On notera que l'invention n'est pas limitée aux modes de réalisation précédemment décrits. En effet, on peut prévoir d'autres formes ou combinaisons de formes pour les saillies 16.

Des exemples comparatifs permettront de mettre en évidence les avantages de la présente invention.

Une garniture de référence a été fabriquée par injection, avec deux surfaces planes parallèles, notée Ex1 par la suite.

Une garniture selon l'invention a été fabriquée par injection avec un moule présentant des formes en creux sur une face afin d'obtenir une garniture avec une face plane et une face avec des saillies. Les saillies sont de forme pyramidale carrée, d'environ 0,1 mm de hauteur et de 0,1 mm de côté. Cette garniture est notée Ex2 par la suite. Elles sont distantes de 0,4 mm environ (centre à centre).

Ces deux garnitures, Ex1 et Ex2, ont chacune un diamètre extérieur et intérieur de 200 mm et 137 mm, respectivement et une épaisseur de 3,5 mm. La même matière a été injectée pour fabriquer Ex1 et Ex2. La composition ressort de l'enseignement de FR 2 822 208 et comprend plus précisément en pourcentage massique : 16% de résine polyester insaturé, 8% d'additif thermo-caoutchouc, 0,5% de catalyseur, 28,5% de sulfate de Baryum, 2% de stéarate de zinc et 25% de fibre de verre d'environ 25mm de longueur.

Le procédé d'injection correspondant est décrit dans la demande de brevet FR 2 836 970.

Les deux garnitures, Ex1 et Ex2, ont été testées sur un banc qui permet de connaître la réponse mécanique des garnitures, notamment dans les premiers stades de la vie des garnitures correspondant au rodage. Un tel banc permet notamment de mettre en évidence des paramètres qui sont liés à des phénomènes de broutement sur un embrayage.

Le banc comporte un mécanisme d'embrayage lié en rotation à un moteur électrique et une friction d'embrayage accouplée à l'une des extrémités d'une barre de torsion, l'autre extrémité de cette barre de torsion étant fixe par rapport au bâti du banc. Les garnitures à tester équipe la friction d'embrayage. L'embrayage est taré au tiers de sa valeur nominale afin de simuler le démarrage normal d'un véhicule.

L'embrayage est ensuite entraîné en rotation ce qui entraîne la friction et vrille la barre de torsion jusqu'au couple correspondant au premier glissement entre les garnitures les plateaux de l'embrayage. Au début du glissement, le couple fourni par la barre de torsion est supérieur au couple de glissement de l'embrayage, en conséquence la rotation de la friction change de sens pour tourner en sens inverse. Ce changement de sens de rotation entraîne une diminution du couple fourni à la friction par la barre de torsion. Lorsque le couple de frottement devient supérieur au couple fourni par la barre de torsion, la friction est accélérée dans le sens de rotation de l'embrayage jusqu'au couple de la barre de torsion correspondant au second glissement entre les garnitures les plateaux de l'embrayage. Le cycle décrit ci-dessus se répète et correspond à un mode vibratoire dont ont calcul le coefficient dynamique (en Newton mètre seconde).

La friction amorti le broutement si le coefficient dynamique est inférieur à zéro et au contraire accroît la propension au broutement si le coefficient dynamique est supérieur à 0.

On a pu constater expérimentalement qu'un coefficient de friction supérieur ou égal à 0,05 N.m.s. conduit à un risque de broutement sur embrayage significatif.

On cherche donc à obtenir des garnitures de friction dont le coefficient de friction soit inférieur à 0,05 N.m.s. au bout d'un nombre de cycle le plus réduit possible.

Le coefficient de frottement dynamique des garnitures Ex1 et Ex2 a été mesuré suivant l'essai ci-dessus, à 120°C et 140°C, conditions de température représentatives du fonctionnement d'un embrayage à sec.

Le tableau ci-dessous reporte le coefficient de frottement dynamique (N.m.s.) mesuré après 0, 150, 2000, 4000 cycles pour chacune des températures.

| Nombre de cycles | | 0 | 150 | 2000 | 4000 |
|---|---|---|---|---|---|
| T = 120°C | Ex1 | 0,09 | 0,10 | 0,07 | 0,06 |
| | Ex2 | 0,00 | 0,04 | 0,04 | -0,02 |
| T = 140°C | Ex1 | 0,09 | 0,15 | 0,05 | 0,05 |
| | Ex2 | 0,01 | 0,03 | 0,04 | 0,02 |

On constate que la garniture Ex1 ne permet d'atteindre une valeur de coefficient de frottement dynamique à 120°C ou 140°C de l'ordre de 0,05 N.m.s. qu'après 4000 cycles, alors que la garniture Ex2 selon l'invention permet d'obtenir dès les premiers cycles des valeurs de coefficient de frottement dynamique à 120°C ou 140°C très significativement inférieurs à 0,05 N.m.s.

On en déduit qu'un embrayage équipé de garniture avec des saillies selon l'invention présentera un risque de broutement fortement diminué au regard d'une garniture standard de même composition, dont les surfaces sont planes.

## Revendications

1. Garniture de friction à sec (10) pour un dispositif de friction d'un embrayage à sec de véhicule automobile, du type comportant une surface de friction (12) destinée à coopérer avec un plateau (14) de pression ou de réaction de l'embrayage, **caractérisée en ce que** la surface de friction (12) comprend des saillies (16) de hauteurs (H) sensiblement identiques, ces saillies (16) s'étendant en hauteur entre des plans supérieur (18) et inférieur (20) sensiblement parallèles, l'aire de l'ensemble des parties (22) du plan supérieur (18) intersectant les saillies (16) étant inférieure ou égale à 60% de l'aire de la partie (24) du plan inférieur (20) intersectant la garniture (10).

2. Garniture de friction (10) selon la revendication 1, **caractérisée en ce qu'**au moins une saillie (16) a une forme générale cylindrique d'axe sensiblement perpendiculaire au plan inférieur (20).

3. Garniture de friction (10) selon la revendication 1 ou 2, **caractérisée en ce qu'**au moins une saillie (16) a une forme générale conique ou tronconique convergeant vers le plan supérieur (18).

4. Garniture de friction (10) selon l'une quelconque des revendications précédentes, **caractérisée en ce qu'**elle comporte au moins deux saillies (16) munies de bases jointives.

5. Garniture de friction (10) selon l'une quelconque des revendications précédentes, **caractérisée en ce que** le rapport de la hauteur (H) des saillies (16) sur une hauteur (E) de la garniture de friction (10) excluant les saillies est compris entre 2 et 10%.

6. Garniture de friction (10) selon l'une quelconque des revendications précédentes, **caractérisée en ce que** la hauteur (H) des saillies est comprise entre 0,1 et 0,3 mm.

7. Garniture de friction (10) selon l'une quelconque des revendications précédentes, **caractérisée en ce que** cette garniture de friction (10) a une hauteur (E), en excluant les saillies, comprise entre 2,5 et 4 mm.

8. Dispositif de friction à sec pour embrayage à sec de véhicule automobile, **caractérisé en ce qu'**il comporte une garniture de friction (10) selon l'une quelconque des revendications précédentes.

9. Dispositif de friction selon la revendication 8, **caractérisé en ce qu'**il comporte deux supports mobiles liés entre eux par des moyens d'amortissement axial, chaque support portant une garniture de friction (10) selon l'une quelconque des revendications 1 à 7.

10. Embrayage à sec de véhicule automobile, **caractérisé en ce qu'**il comporte un dispositif de friction selon la revendication 8 ou 9.

11. Moule pour le moulage d'une garniture de friction (10), **caractérisé en ce qu'**il est muni d'une surface de moulage de forme complémentaire de la surface de friction (12) d'une garniture de friction (10) selon l'une quelconque des revendications 1 à 7.

12. Méthode de rodage d'une garniture de friction à sec (10) pour un dispositif de friction d'un embrayage à sec de véhicule automobile du type comportant une surface de friction (12) destinée à coopérer avec un plateau (14) de pression ou de réaction de l'embrayage où l'on choisit ladite garniture selon les caractéristiques de la revendication 1 et où le rodage s'effectue par abrasion d'une partie au moins, voire de la totalité, des saillies (16) de ladite garniture.

## Patentansprüche

1. Trocken-Reibbelag (10) für eine Reibungsvorrichtung einer Trocken-Kupplung eines Kraftfahrzeugs, umfassend eine Reibfläche (12), die dazu bestimmt ist, mit einer Druckplatte (14) oder einer Gegendruckplatte der Kupplung zusammenzuwirken, **dadurch gekennzeichnet, dass** die Reibfläche (12) Vorsprünge (16) mit etwa gleicher Höhe (H) umfasst, wobei sich diese Vorsprünge (16) in der Höhe zwischen einer oberen Ebene (18) und einer etwa parallelen unteren Ebene (20) erstrecken, wobei der Gesamt-Flächeninhalt der Abschnitte (22) der oberen Ebene (18), welche die Vorsprünge (16) schneiden, kleiner als oder gleich 60% ist von dem Flächeninhalt des Abschnitts (24) der unteren Ebene (20), welcher den Belag (10) schneidet.

2. Reibbelag (10) nach Anspruch 1, **dadurch gekennzeichnet, dass** zumindest ein Vorsprung (16) eine zylindrische Gesamtform mit einer etwa senkrecht zur unteren Ebene (20) stehenden Achse hat.

3. Reibbelag (10) nach Anspruch 1 oder 2, **dadurch gekennzeichnet, dass** zumindest ein Vorsprung (16) eine konische oder kegelstumpfförmige Gesamtform hat, die in Richtung zu der oberen Ebene (18) konvergiert.

4. Reibbelag (10) nach einem der vorherigen Ansprüche, **dadurch gekennzeichnet, dass** er mindestens zwei Vorsprünge (16) mit aneinandergesetzten Basen aufweist.

5. Reibbelag (10) nach einem der vorherigen Ansprüche, **dadurch gekennzeichnet, dass** das Verhältnis der Höhe (H) der Vorsprünge (16) zu einer die Vorsprünge ausschließenden Höhe (E) des Reibbelags (10) zwischen 2 und 10% liegt.

6. Reibbelag (10) nach einem der vorherigen Ansprüche, **dadurch gekennzeichnet, dass** die Höhe (H) der Vorsprünge (16) zwischen 0,1 und 0,3 mm liegt.

7. Reibbelag (10) nach einem der vorherigen Ansprüche, **dadurch gekennzeichnet, dass** dieser Reibbelag (10) eine die Vorsprünge ausschließende Höhe (E) zwischen 2,5 und 4 mm hat.

8. Trocken-Reibungsvorrichtung für eine Trocken-Kupplung eines Kraftfahrzeugs, **dadurch gekennzeichnet, dass** sie einen Reibbelag (10) nach einem der vorherigen Ansprüche umfasst.

9. Reibungsvorrichtung nach Anspruch 8, **dadurch gekennzeichnet, dass** sie zwei bewegliche Träger, die untereinander durch axial wirksame Dämpfungsmittel verbunden sind, umfasst, wobei jeder Träger einen Reibbelag (10) nach einem der Ansprüche 1 bis 7 trägt.

10. Trockenkupplung eines Kraftfahrzeugs, **dadurch gekennzeichnet, dass** sie eine Reibungsvorrichtung nach Anspruch 8 oder 9 umfasst.

11. Form zur Formung eines Reibbelags (10), **dadurch gekennzeichnet, dass** sie mit einer Formfläche versehen ist, die komplementär zu der Reibfläche (12) eines Reibbelags (10) nach einem der Ansprüche 1 bis 7 ist.

12. Verfahren zum Einfahren eines Trocken-Reibbelags (10) für eine Reibungsvorrichtung einer Trocken-Kupplung eines Kraftfahrzeugs, die eine Reibfläche (12) umfasst, welche dazu bestimmt ist, mit einer Druckplatte (14) oder einer Gegendruckplatte der Kupplung zusammenzuwirken, wobei der besagte Belag entsprechend den Merkmalen von Anspruch 1 gewählt wird und wobei das Einfahren durch Abrieb von zumindest einem Teil oder sogar von der Gesamtheit der Vorsprünge (16) des besagten Belags erfolgt.

## Claims

1. Dry friction lining (10) for a friction device of a motor vehicle dry clutch, of the type comprising a friction surface (12) which is designed to co-operate with a pressure or reaction plate (14) of the clutch, **characterised in that** the friction surface (12) comprises projections (16) with substantially identical heights (H), the height of these projections (16) extending between substantially parallel upper (18) and lower (20) planes, with the area of all of the parts (22) of the upper plane (18) which intersects the projections (16) being 60% or less than the area of the part (24) of the lower plane (20) which intersects the lining (10).

2. Friction lining (10) according to claim 1, **characterised in that** at least one projection (16) has a generally cylindrical form with an axis which is substantially perpendicular to the lower plane (20).

3. Friction lining (10) according to claim 1 or 2, **characterised in that** at least one projection (16) has a generally conical or frusto-conical form which converges towards the upper plane (18).

4. Friction lining (10) according to any one of the preceding claims, **characterised in that** it comprises at least two projections (16) which are provided with contiguous bases.

5. Friction lining (10) according to any one of the preceding claims, **characterised in that** the ratio of the height (H) of the projections (16) to a height (E) of the friction lining (10) excluding the projections is between 2 and 10%.

6. Friction lining (10) according to any one of the preceding claims, **characterised in that** the height (H) of the projections is between 0.1 and 0.3 mm.

7. Friction lining (10) according to any one of the preceding claims, **characterised in that** this friction lining (10) has a height (E) excluding the projections of between 2.5 and 4 mm.

8. Dry friction device for a motor vehicle dry clutch, **characterised in that** it comprises a friction lining (10) according to any one of the preceding claims.

9. Friction device according to claim 8, **characterised in that** it comprises two mobile supports which are connected to one another by axial damping means, with each support supporting a friction lining (10) according to any one of claims 1 to 7.

10. Motor vehicle dry clutch, **characterised in that** it comprises a friction device according to claim 8 or 9.

11. Mould for moulding a friction lining (10), **characterised in that** it is provided with a moulding surface with a form which is complementary to the friction surface (12) of a friction lining (10) according to any one of claims 1 to 7.

12. Method for running-in a dry friction lining (10) for a friction device of a motor vehicle dry clutch, of the type comprising a friction surface (12) which is designed to co-operate with a pressure or reaction plate (14) of the clutch, wherein the said lining is selected according to the characteristics of claim 1, and wherein the running-in is carried out by abrasion of at least part, or all, of the projections (16) of the said lining.
